# EUROPEAN PATENT APPLICATION

(11) **EP 4 514 054 A1**
(43) Date of publication of application: **26.02.2025**
(21) Application number: 23790977.5
(22) Date of filing: 22.03.2023
(51) Int. Cl.: H04W 76/18, H04W 4/70

(54) **METHOD FOR HANDLING CONSISTENT LBT FAILURE, TERMINAL, AND NETWORK DEVICE**

(30) Priority: 22.04.2022 CN 202210428673; 14.10.2022 CN 202211262414
(71) Applicant: Datang Mobile Communications Equipment Co., Ltd., Beijing 100085 (CN)
(72) Inventor: ZHAO, Yali, Beijing 100085 (CN)
(74) Representative: Cabinet Nony
(86) International application number: PCT/CN2023/083196
(87) International publication number: WO 2023/202316

(57) **Abstract**

Embodiments of the present disclosure relate to the technical field of wireless communications, and in particular to a method for handling consistent LBT failure, a terminal, and a network device, providing effective solution if the terminal experiences consistent LBT failure on a carrier or BWP of a sidelink interface. According to the embodiments of the present disclosure, the terminal performs LBT on a target object of a sidelink interface, the target object being one frequency domain resource unit configured for the sidelink interface or one frequency domain resource unit in an activated state; and if it is determined that consistent LBT failure occurs on the target object, the terminal performs target object reselection, or reports first indication information to a network device serving the terminal, or determines SL RLF.

## Description

### CROSS-REFERENCE TO RELATED APPLICATIONS

This application claims priority to Chinese Patent Application No. 202210428673.1, filed on April 22, 2022, the entire contents of which are incorporated herein by reference; and this application claims priority to Chinese Patent Application No. 202211262414.2, filed on October 14, 2022, the entire contents of which are incorporated herein by reference.

### TECHNICAL FIELD

The present disclosure relates to the technical field of wireless communications, and in particular, to a method for handling consistent LBT failure, a terminal and a network device.

### BACKGROUND

Traditional wireless communication uses cellular network communication mode, that is, a terminal and a network device transmit uplink and downlink data or control information through a Uu interface. Direct communication is an approach in which neighboring terminals can transmit data over a direct communication link (also known as sidelink or PC5) within a close range. A wireless interface corresponding to the Sidelink is referred to as a direct communication interface (also called sidelink interface or PCS interface).

For Shared Spectrum (also known as Unlicensed Spectrum), terminal transmitters need to listen to the control channel before sending data, i.e., they need to support the Listen Before Talk, LBT, mechanism, which is introduced to avoid conflicts when different terminals use the shared spectrum as much as possible.

In the direct communication system of the 3rd Generation Partnership Project, 3GPP, New Radio, NR, Rel-16, the sidelink interface has only one Bandwidth Part, BWP, but the sidelink interface will be considered in Rel-18 to support multiple carriers or multiple BWPs. When a terminal communicates using one carrier or BWP of the sidelink interface, there is no corresponding solution if consistent LBT failure occurs on that one carrier or BWP.

### SUMMARY

A method for handling consistent LBT failure, a terminal, and a network device are provided according to embodiments of the present disclosure, which supply an effective solution in case that the terminal has experienced consistent LBT failure on a carrier or a BWP of a sidelink interface.

In a first aspect, a method for handling consistent LBT failure is provided according to an embodiment of the present disclosure. The method includes:
performing, by a terminal, LBT on a target object of a sidelink interface; where the target object is one frequency domain resource unit configured for the sidelink interface or one frequency domain resource unit in an activated state, and the one frequency domain resource unit includes one of one carrier, one Bandwidth Part, BWP, one resource pool, one frequency subband, and one resource set; and
in response to determining that consistent LBT failure occurs on the target object, performing, by the terminal, target object reselection, or reporting, by the terminal, first indication information to a network device serving the terminal, or determining, by the terminal, a Side Link Radio Link Failure, SL RLF; where the first indication information is used to indicate that the terminal has experienced consistent LBT failure on the sidelink interface or that the terminal has experienced consistent LBT failure on the target object of the sidelink interface.

Optionally, the performing, by the terminal, target object reselection includes:
determining, by the terminal, a candidate target object set corresponding to the sidelink interface, where the candidate object target set contains at least one candidate target object; and
reselecting, by the terminal, a target object of the sidelink interface from the candidate target object set.

Optionally, each candidate target object in the candidate target object set satisfies a part of or all of following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

Optionally, after the target object reselection is performed by the terminal, the method further includes:
if the target object reselected from the candidate target object set is a shared spectrum, performing, by the terminal, LBT on the reselected target object.

Optionally, after the target object reselection is performed by the terminal, the method further includes:
if the terminal determines that consistent LBT failure has occurred on each candidate target object in the candidate target object set, reporting, by a Medium Access Control, MAC, layer of the terminal to a higher layer of the terminal, that the terminal has experienced consistent LBT failure on the sidelink interface.

Optionally, the method further includes:
after the higher layer of the terminal receives a report from the MAC layer of the terminal that the terminal has experienced consistent LBT failure on the sidelink interface, determining, by the terminal, that an SL RLF has occurred.

Optionally, after the terminal determines that the SL RLF has occurred, the method further includes:
if the terminal is in a Radio Resource Control, RRC, connected state, reporting, by the terminal, a first message to a network device serving the terminal, the first message being an RRC message or a MAC Control Element, CE.

Optionally, the reporting, by the terminal, the first message to the network device serving the terminal if the terminal is in the RRC connected state includes:
if the terminal is in the RRC connected state and the terminal uses a resource allocation mode of network scheduling, reporting, by the terminal, the first message to the network device serving the terminal.

Optionally, the first message needs to carry second indication information, and the second indication information is used to indicate that the terminal has experienced the SL RLF because the terminal has experienced consistent LBT failure on the sidelink interface.

Optionally, the reporting, by the terminal, first indication information to a network device serving the terminal includes:
if the terminal is in an RRC connected state or if the terminal is in an RRC connected state and uses a resource allocation mode of network scheduling, reporting, by the terminal, the first indication information to the network device serving the terminal.

Optionally, the reporting, by the terminal, first indication information to a network device serving the terminal specifically includes:
reporting, by the terminal, the first indication information to the network device in way of an RRC signaling or a MAC CE;
where the RRC signaling or the MAC CE at least includes one or combination of identification information of the target object and a link identification of the sidelink interface; and
where the link identification of the sidelink interface includes a part of or all of following information: a destination address of the sidelink interface, a source address of the sidelink interface, and a cast type of the sidelink interface.

Optionally, after the terminal reports the first indication information to the network device, the method further includes:
receiving a target object reconfiguration signaling sent by the network device; or
receiving a notification to release connection of the sidelink interface, the notification being issued by the network device.

In a second aspect, a method for handling consistent LBT failure is provided according to an embodiment of the present disclosure, the method includes:
receiving, by a network device, first indication information reported by a terminal, where the first indication information is used to indicate that the terminal has experienced consistent LBT failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit includes one of one carrier, one Bandwidth Part, BWP, one resource pool, one frequency subband, and one resource set;
sending, by the network device, a target object reconfiguration signaling to the terminal or notifying, by the network device, the terminal to release connection of the sidelink interface.

Optionally, the method further includes:
receiving, by the network device, a first message reported by the terminal, the first message being a Radio Resource Control, RRC, message or a Medium Access Control Control Element, MAC CE;
where the first message is reported by the terminal to the network device after the terminal determines that a Side Link Radio Link Failure, SL RLF, has occurred.

Optionally, the first message needs to carry second indication information, and the second indication information is used to indicate that the terminal has experienced the SL RLF because the terminal has experienced consistent LBT failure on the sidelink interface.

In a third aspect, a terminal is provided according to an embodiment of the present disclosure, including a memory, a processor, and a transceiver;
the memory is used to store a computer program;
the transceiver is used to transmit and receive data under control of the processor; and
the processor is used to read the computer program in the memory and perform:
   performing Listen Before Talk, LBT, on a target object of a sidelink interface; where the target object is one frequency domain resource unit configured for the sidelink interface or one frequency domain resource unit in an activated state, and the one frequency domain resource unit includes one of one carrier, one Bandwidth Part, BWP, one resource pool, one frequency subband, and one resource set; and
   in response to determining that consistent LBT failure occurs on the target object, performing target object reselection, or reporting first indication information to a network device serving the terminal, or determining a Side Link Radio Link Failure, SL RLF; where the first indication information is used to indicate that the terminal has experienced consistent LBT failure on the sidelink interface or that the terminal has experienced consistent LBT failure on the target object of the sidelink interface.

Optionally, the processor is specifically used to:
determine a candidate target object set corresponding to the sidelink interface, where the candidate object target set contains at least one candidate target object; and
reselect a target object of the sidelink interface from the candidate target object set.

Optionally, each candidate target object in the candidate target object set satisfies a part of or all of following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

Optionally, after the target object reselection is performed, the processor is further used to:
if the target object reselected from the candidate target object set is a shared spectrum, perform LBT on the reselected target object.

Optionally, after the target object reselection is performed, the processor is further used to:
in response to determining that consistent LBT failure has occurred on each candidate target object in the candidate target object set, report, via a Medium Access Control, MAC, layer of the terminal to a higher layer of the terminal, that the terminal has experienced consistent LBT failure on the sidelink interface.

Optionally, the processor is further used to:
after the higher layer of the terminal receives a report from the MAC layer of the terminal that the terminal has experienced consistent LBT failure on the sidelink interface, determine that an SL RLF has occurred.

Optionally, after determining that the SL RLF has occurred, the processor is further used to:
if the terminal is in a Radio Resource Control, RRC, connected state, report a first message to a network device serving the terminal, the first message being an RRC message or a MAC Control Element, CE.

Optionally, the processor is specifically used to:
if the terminal is in the RRC connected state and the terminal uses a resource allocation mode of network scheduling, report the first message to the network device serving the terminal.

Optionally, the first message needs to carry second indication information, and the second indication information is used to indicate that the terminal has experienced the SL RLF because the terminal has experienced consistent LBT failure on the sidelink interface.

Optionally, the processor is specifically used to:
if the terminal is in an RRC connected state or if the terminal is in an RRC connected state and uses a resource allocation mode of network scheduling, report the first indication information to the network device serving the terminal.

Optionally, the processor is specifically used to:
report the first indication information to the network device in way of an RRC signaling or a MAC CE;
where the RRC signaling or the MAC CE at least includes one or combination of identification information of the target object and a link identification of the sidelink interface; and
where the link identification of the sidelink interface includes a part of or all of following information: a destination address of the sidelink interface, a source address of the sidelink interface, and a cast type of the sidelink interface.

Optionally, after reporting the first indication information to the network device, the processor is further used to:
receive a target object reconfiguration signaling sent by the network device; or
receive a notification to release connection of the sidelink interface, the notification being issued by the network device.

In a fourth aspect, a network device is provided according to an embodiment of the present disclosure, including a memory, a processor, and a transceiver;
the memory is used to store a computer program;
the transceiver is used to transmit and receive data under control of the processor; and
the processor is used to read the computer program in the memory and perform:
   receiving first indication information reported by a terminal, where the first indication information is used to indicate that the terminal has experienced consistent Listen Before Talk, LBT, failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit includes one of one carrier, one Bandwidth Part, BWP, one resource pool, one frequency subband, and one resource set;
   sending a target object reconfiguration signaling to the terminal or notifying the terminal to release connection of the sidelink interface.

Optionally, the processor is further used to:
receive a first message reported by the terminal, the first message being a Radio Resource Control, RRC, message or a Medium Access Control Control Element, MAC CE;
where the first message is reported by the terminal to the network device after the terminal determines that a Side Link Radio Link Failure, SL RLF, has occurred.

Optionally, the first message needs to carry second indication information, and the second indication information is used to indicate that the terminal has experienced the SL RLF because the terminal has experienced consistent LBT failure on the sidelink interface.

In a fifth aspect, an apparatus for handling LBT failure is provided according to an embodiment of the present disclosure, including:
an execution module, used to perform LBT on a target object of a sidelink interface; where the target object is one frequency domain resource unit configured for the sidelink interface or one frequency domain resource unit in an activated state, and the one frequency domain resource unit includes one of one carrier, one Bandwidth Part, BWP, one resource pool, one frequency subband, and one resource set; and
a processing module, used to perform target object reselection or report first indication information to a network device serving a terminal or determine a Side Link Radio Link Failure, SL RLF, in response to determining that consistent LBT failure occurs on the target object; where the first indication information is used to indicate that the terminal has experienced consistent LBT failure on the sidelink interface or that the terminal has experienced consistent LBT failure on the target object of the sidelink interface.

Optionally, the processing module is specifically used to:
determine a candidate target object set corresponding to the sidelink interface, where the candidate object target set contains at least one candidate target object; and
reselect a target object of the sidelink interface from the candidate target object set.

Optionally, each candidate target object in the candidate target object set satisfies a part of or all of following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

Optionally, after the target object reselection is performed, the processing module is further used to:
if the target object reselected from the candidate target object set is a shared spectrum, perform LBT on the reselected target object.

Optionally, after the target object reselection is performed, the processing module is further used to:
in response to determining that consistent LBT failure has occurred on each candidate target object in the candidate target object set, report, via a Medium Access Control, MAC, layer of the terminal to a higher layer of the terminal, that the terminal has experienced consistent LBT failure on the sidelink interface.

Optionally, the processing module is further used to:
after the higher layer of the terminal receives a report from the MAC layer of the terminal that the terminal has experienced consistent LBT failure on the sidelink interface, determine that an SL RLF has occurred.

Optionally, after determining that the SL RLF has occurred, the processing module is further used to:
if the terminal is in a Radio Resource Control, RRC, connected state, report a first message to a network device serving the terminal, the first message being an RRC message or a MAC Control Element, CE.

Optionally, the processing module is specifically used to:
if the terminal is in the RRC connected state and the terminal uses a resource allocation mode of network scheduling, report the first message to the network device serving the terminal.

Optionally, the first message needs to carry second indication information, and the second indication information is used to indicate that the terminal has experienced the SL RLF because the terminal has experienced consistent LBT failure on the sidelink interface.

Optionally, the processing module is specifically used to:
if the terminal is in an RRC connected state or if the terminal is in an RRC connected state and uses a resource allocation mode of network scheduling, report the first indication information to the network device serving the terminal.

Optionally, the processing module is specifically used to:
report the first indication information to the network device in way of an RRC signaling or a MAC CE;
where the RRC signaling or the MAC CE at least includes one or combination of identification information of the target object and a link identification of the sidelink interface; and
where the link identification of the sidelink interface includes a part of or all of following information: a destination address of the sidelink interface, a source address of the sidelink interface, and a cast type of the sidelink interface.

Optionally, after reporting the first indication information to the network device, the processing module is further used to:
receive a target object reconfiguration signaling sent by the network device; or
receive a notification to release connection of the sidelink interface, the notification being issued by the network device.

In a sixth aspect, an apparatus for handling consistent LBT failure is provided according to an embodiment of the present disclosure, including:
a reception module, used to receive first indication information reported by a terminal, where the first indication information is used to indicate that the terminal has experienced consistent LBT failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit includes one of one carrier, one Bandwidth Part, BWP, one resource pool, one frequency subband, and one resource set; and
a sending module, used to send a target object reconfiguration signaling to the terminal or notifies the terminal to release connection of the sidelink interface.

Optionally, the reception module is further used to:
receive a first message reported by the terminal, the first message being a Radio Resource Control, RRC, message or a Medium Access Control Control Element, MAC CE;
where the first message is reported by the terminal to the network device after the terminal determines that a Side Link Radio Link Failure, SL RLF, has occurred.

Optionally, the first message needs to carry second indication information, and the second indication information is used to indicate that the terminal has experienced the SL RLF because the terminal has experienced consistent LBT failure on the sidelink interface.

In a seventh aspect, a computer-readable storage medium is provided according to an embodiment of the present disclosure, which stores a computer program thereon. The computer program is used to cause a computer to perform the method described in the first aspect or to perform the method described in the second aspect.

In the embodiments of the present disclosure, the terminal performs LBT on the target object of the sidelink interface, if consistent LBT failure occurs on the target object, the terminal may perform target object reselection or report first indication information to the network device serving the terminal or determine an SL RLF, and the network device issues an indication for handing the consistent LBT failure. Thus, in case that the terminal experiences consistent LBT failure on the target object of the sidelink interface, the system can function normally when the sidelink interface is using a shared spectrum with a variety of optional handling mechanisms provided in embodiments of the present disclosure, improving system performance.

### BRIEF DESCRIPTION OF THE DRAWINGS

In order to more clearly illustrate technical solutions of embodiments of the present disclosure, drawings to be used in the embodiments of the present disclosure are to be briefly described below. Obviously, these drawings described below are only for some of the embodiments of the present disclosure, while other drawings can be obtained by the person of ordinary skill in the art based on these drawings without creative labor.
FIG. 1 illustrates an optional communication mode according to an embodiment of the present disclosure;
FIG. 2 illustrates another optional communication mode according to an embodiment of the present disclosure;
FIG. 3 is a schematic diagram of an optional application scenario according to an embodiment of the present disclosure;
FIG. 4 is a schematic flowchart of a method for handling consistent LBT failure according to an embodiment of the present disclosure;
FIG. 5 is a schematic chart of an overall flow of a method for handling consistent LBT failure experienced by a terminal according to an embodiment of the present disclosure;
FIG. 6 is a schematic chart of an overall flow of a method for handling consistent LBT failure experienced by a terminal according to an embodiment of the present disclosure;
FIG. 7 is a schematic chart of an overall flow of a method for handling consistent LBT failure experienced by a terminal according to an embodiment of the present disclosure;
FIG. 8 is a schematic chart of an overall flow of a method for handling consistent LBT failure experienced by a terminal according to an embodiment of the present disclosure;
FIG. 9 is a flowchart of a method for handling consistent LBT failure at terminal-side according to an embodiment of the present disclosure;
FIG. 10 is a flowchart of a method for handling consistent LBT failure at network device-side according to an embodiment of the present disclosure;
FIG. 11 is a schematic structural diagram of a terminal according to an embodiment of the present disclosure;
FIG. 12 is a schematic structural diagram of a network device according to an embodiment of the present disclosure;
FIG. 13 is a schematic structural diagram of an apparatus for handling consistent LBT failure according to an embodiment of the present disclosure; and
FIG. 14 is a schematic structural diagram of another apparatus for handling consistent LBT failure according to an embodiment of the present disclosure.

### DETAILED DESCRIPTION OF THE EMBODIMENTS

Technical solutions in embodiments of the present disclosure are to be described clearly and completely in the following in conjunction with drawings used in the embodiments of the present disclosure. Obviously, the described embodiments are merely a part rather than all of the embodiments of the present disclosure. Based on the embodiments in the present disclosure, all other embodiments obtained by a person of ordinary skill in the art without making creative labor fall within the scope of protection of the present disclosure.

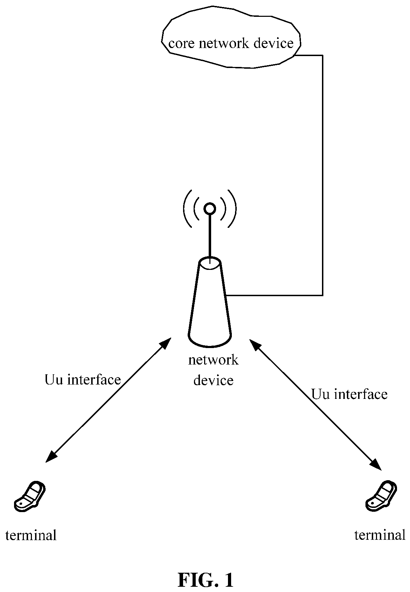

Traditional wireless communication uses cellular network communication mode. That is, as shown in FIG. 1, a terminal and a network device transmit uplink and downlink data or control information through a Uu interface, the terminal accesses the network device through a cellular network and can access a core network device through the network device. The terminal and the network device communicate with each other through the Uu interface, realizing transmission of uplink and downlink data or control information through the Uu interface.

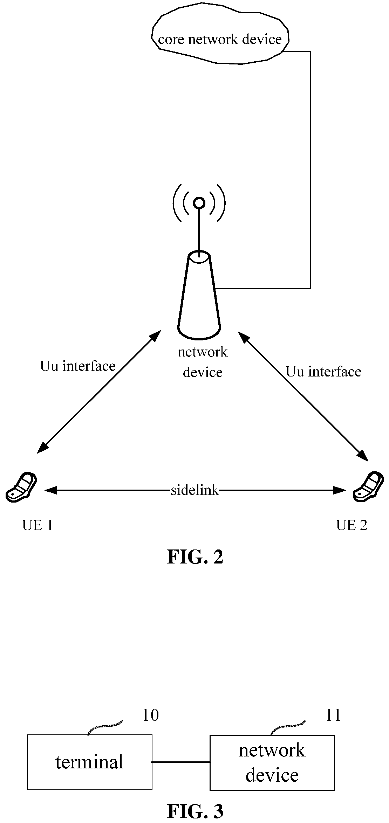

In addition, neighboring terminals can perform data transmission within a close range via a direct communication link. As shown in FIG. 2, data transmission can be performed via a direct communication link (also referred to as sidelink or PC5) between User Equipment, UE, 1 and UE 2. A wireless interface corresponding to the Sidelink is referred to as a direct communication interface (also called sidelink interface or PC5 interface).

As shown in FIG. 3, which is an optional application scenario according to an embodiment of the present disclosure, a wireless communication system includes a terminal 10 and a network device 11;
where the terminal 10 performs LBT on a target object of a sidelink interface; in case of determining that consistent LBT failure occurs on the target object, the terminal 10 performs target object reselection, or reports first indication information to the network device 11 serving the terminal 10, or determines a Side Link Radio Link Failure, SL RLF;
where the target object is one frequency domain resource unit configured for the sidelink interface or one frequency domain resource unit in an activated state, and the one frequency domain resource unit includes one of one carrier, one BWP, one resource pool, one frequency subband, and one resource set.

The first indication information is used to indicate that the terminal has experienced consistent LBT failure on the sidelink interface or that the terminal has experienced consistent LBT failure on the target object of the sidelink interface.

In the embodiments of the present disclosure, the terminal performs LBT on the target object of the sidelink interface, if consistent LBT failure occurs on the target object, the terminal may perform target object reselection or report first indication information to the network device serving the terminal or determine an SL RLF, and the network device issues an indication for handing the consistent LBT failure. Thus, in case that the terminal experiences consistent LBT failure on the target object of the sidelink interface, the system can function normally when the sidelink interface is using a shared spectrum with a variety of optional handling mechanisms provided in embodiments of the present disclosure, improving system performance.

Technical solutions provided by embodiments of the present disclosure are applicable to a variety of systems, such as Global System of Mobile communication, GSM, Code Division Multiple Access, CDMA, system, Wideband Code Division Multiple Access, WCDMA, system, General Packet Radio Service, GPRS, system, Long Term Evolution, LTE, system, LTE Frequency Division Duplex, FDD, system, LTE Time Division Duplex, TDD, system, Long Term Evolution Advanced, LTE-A, system, Universal Mobile Telecommunication System, UMTS, Worldwide interoperability for Microwave Access, WiMAX, system, and 5G NR system. These various systems each include a terminal and a network device. The system may also include a core network component, for example, Evolved Packet System, EPS, 5G System, 5GS, etc.

A network device involved in embodiments of the present disclosure may be a base station, and the base station may include multiple cells that provide services to terminals. Depending on the specific application, the base station may also be referred to as an access point, or may be a device in an access network that communicates with a wireless terminal device over one or more sectors on an air interface, or may be in other names. The network device may be used to interchange received air frames with Internet Protocol, IP, packets, acting as a router between the wireless terminal device and the remainder of the access network, where the remainder of the access network may include an Internet Protocol, IP, communications network. The network device may also coordinate management of attributes of the air interface. For example, the network device involved in embodiments of the present disclosure may be a Base Transceiver Station, BTS, in a Global System for Mobile communications, GSM, or Code Division Multiple Access, CDMA, or a NodeB in Wide-band Code Division Multiple Access, WCDMA, or an evolutional Node B, eNB or e-NodeB, in a Long Term Evolution, LTE, system, a 5G base station, gNB, in 5G network architectures (next generation systems), a Home evolved Node B, HeNB, a relay node, a home base station (femto), a micro base station (pico), etc., which are not limited in the embodiments of the present disclosure. In some network architectures, the network device may include Centralized Unit, CU, nodes and Distributed Unit, DU, nodes, and the Centralized Unit and Distributed Unit nodes may also be arranged geographically separate.

A terminal involved in embodiments of the present disclosure may be a device that provides voice and/or data connectivity to a user, a handheld device with wireless connectivity, or other processing device connected to a wireless modem, etc. The name of the terminal device may also vary in different systems, e.g., in 5G systems, the terminal may be referred to as User Equipment, UE. The wireless terminal device may communicate with one or more Core Networks, CNs, via a Radio Access Network, RAN. The wireless terminal device may be a mobile terminal device such as a cell phone (or "cellular" phone) and a computer having a mobile terminal device, e.g., a portable, pocket-sized, handheld, computer-built, or vehicle-mounted mobile device, that exchanges language and/or data with the wireless access network. Examples include Personal Communication Service, PCS, phones, cordless phones, Session Initiated Protocol, SIP, phones, Wireless Local Loop, WLL, stations, Personal Digital Assistants, PDAs, and the like. Wireless terminal device can also be called system, subscriber unit, subscriber station, mobile station, mobile, remote station, access point, remote terminal, access terminal, user terminal, user agent, user device, and is not limited in the embodiments of the present disclosure.

Multi Input Multi Output, MIMO, transmission can be performed between network device and terminal each using one or more antennas, and MIMO transmission can be Single User MIMO, SU-MIMO, or Multiple User MIMO, MU-MIMO. Depending on the shape and number of antenna combination, the MIMO transmission can be 2D-MIMO, 3D-MIMO, FD-MIMO, or massive-MIMO, or it can be diversity transmission or pre-coded transmission or beamforming transmission, etc.

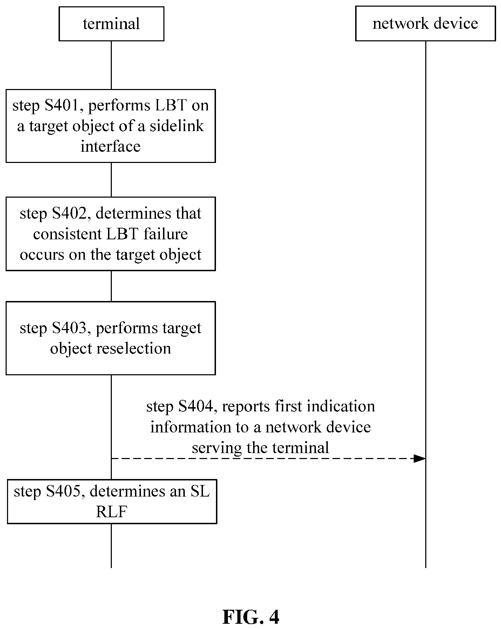

As shown in FIG. 4, which is a schematic flowchart of a method for handling consistent LBT failure, the method may specifically include the following steps.

In step S401, a terminal performs LBT on a target object of a sidelink interface.

The target object is one frequency domain resource unit configured for the sidelink interface or one frequency domain resource unit in an activated state. The one frequency domain resource unit includes one of one carrier, one BWP, one resource pool, one frequency subband, and one resource set.

In step S402, the terminal determines that consistent LBT failure occurs on the target object.

In step S403, the terminal performs target object reselection.

In step S404, the terminal reports first indication information to a network device serving the terminal.

In step S405, the terminal determines an SL RLF.

Here, the first indication information is used to indicate that the terminal has experienced consistent LBT failure on the sidelink interface or that the terminal has experienced consistent LBT failure on the target object of the sidelink interface.

It should be noted that steps S403, S404 and S405 are different handling ways of the terminal in response to the terminal determining that consistent LBT failure occurs on the target object. Steps S403, S404 and S405 are three implementations in coordinating relation, and in practical, only step S403 or only step S404 or only step S405 may be performed.

It is noted that the sidelink interface of embodiments of the present disclosure supports multiple frequency domain resource units, for example, the sidelink interface supports multiple carriers, multiple BWPs, multiple resource pools, multiple frequency subbands, multiple resource sets, or the like.

In an embodiment of the present disclosure, the target object of the sidelink interface is a shared spectrum, and the terminal performs LBT on the target object of the sidelink interface.

Since the target object of the sidelink interface is the shared spectrum, the terminal performs LBT on the target object to avoid conflict when different terminals use the shared spectrum.

LBT is performed by a physical layer of the terminal, and if the terminal hears that a channel is occupied, no data transmission is performed. If the physical layer of the terminal performs LBT before data transmission and the LBT process results in that the channel is occupied and transmission is not possible, the physical layer may indicate an LBT failure to a Medium Access Control, MAC, layer.

The MAC layer maintains a timer (Ibt-FailureDetectionTimer) and a counter (LBT_COUNTER), and an initial value of the counter is 0. Each time the MAC layer receives an LBT failure indicated by the physical layer, the MAC layer restarts the timer and the value of the counter is added by 1. If the counter LBT_COUNTER reaches a preset maximum value while the timer, lbt-FailureDetectionTimer, is running, the MAC layer determines that consistent LBT failure has occurred.

Different handling ways of the terminal in response to the terminal determining that consistent LBT failure occurs on the target object according to embodiments of the present disclosure are respectively described hereinafter.

Way 1: The terminal performs target object reselection.

In an optional implementation, the terminal determines a candidate target object set corresponding to the sidelink interface, where the candidate object target set contains at least one candidate target object; and the terminal reselects a target object of the sidelink interface from the candidate target object set.

Here, each candidate target object in the candidate target object set satisfies a part of or all of the following conditions 1 to 3.

Condition 1: Each candidate target object in the candidate target object set is a target object of the sidelink interface supported by capability of the terminal.

Condition 2: A channel measurement result corresponding to each candidate target object in the candidate target object set is greater than or equal to a preset threshold.

It is noted that the channel measurement result may be a Channel Busy Rate, CBR, measurement result, or a Channel Occupancy, CO.

In embodiments of the present disclosure, different preset thresholds may be set for different types of channel measurement results. For example, if the channel measurement result is a CBR, a corresponding preset threshold may be a first threshold; if the CBR corresponding to a candidate target object is greater than the first threshold, then it is determined that the candidate target object satisfies condition 2. If the channel measurement result is a CO, a corresponding preset threshold may be a second threshold; if the CO corresponding to a candidate target object is greater than the second threshold, then it is determined that the candidate target object satisfies condition 2.

Condition 3: Each candidate target object in the candidate target object set is a target object available to the sidelink interface configured for the terminal by a network device accessed by the terminal.

Optionally, in embodiments of the present disclosure, each candidate target object in the candidate target object set is one frequency domain resource unit, where the one frequency domain resource unit includes one of one carrier, one BWP, one resource pool, one frequency subband, and one resource set.

In embodiments of the present disclosure, after the target object reselection is performed, if the target object reselected from the candidate target object set is a shared spectrum, the terminal optionally performs LBT on the reselected target object.

In implementation, if the terminal determines that consistent LBT failure has occurred on each candidate target object in the candidate target object set, the MAC layer of the terminal reports to a higher layer of the terminal that the terminal has experienced consistent LBT failure on the sidelink interface.

It is noted that the higher layer of the terminal in embodiments of the present disclosure may be a Radio Resource Control, RRC, layer of the terminal.

After the higher layer of the terminal receives a report from the MAC layer of the terminal that the terminal has experienced consistent LBT failure on the sidelink interface, the terminal determines that an SL RLF has occurred.

After the terminal determines that the SL RLF has occurred, if the terminal is in an RRC connected state, the terminal reports a first message to a network device serving the terminal; or if the terminal is in an RRC connected state and the terminal uses a resource allocation mode of network scheduling, the terminal reports a first message to a network device serving the terminal.

The first message may be an RRC message or a MAC Control Element, CE.

Exemplarily, the first message may be sidelink terminal information (Sidelink UE Information).

In implementation, the first message needs to carry second indication information;
where the second indication information is used to indicate that the terminal has experienced the SL RLF because the terminal has experienced consistent LBT failure on the sidelink interface.

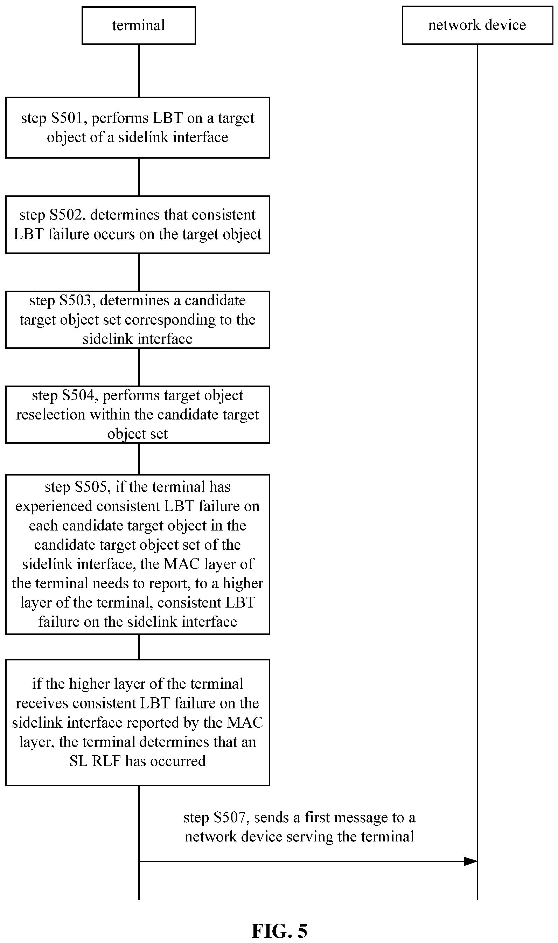

An overall flow of a method for handling consistent LBT failure experienced by a terminal is detailed hereinafter according to a specific embodiment of the present disclosure. As shown in FIG. 5, the overall flow may specifically include the following steps.

In step S501, the terminal performs LBT on a target object of a sidelink interface.

The target object is specifically one frequency domain resource unit, and the target object is one frequency domain resource unit that is configured for a current sidelink interface of the terminal or is one frequency domain resource unit in an activated state. The one frequency domain resource unit includes one of one carrier, one BWP, one resource pool, one frequency subband, and one resource set.

The terminal performs LBT on the target object as follows:
LBT is performed by a physical layer of the terminal, and if the terminal hears that a channel is occupied, no data transmission is performed;
if the physical layer of the terminal performs LBT prior to data transmission, and the LBT process results in that the channel is occupied and transmission is not possible, the physical layer of the terminal may indicate an LBT failure to a MAC layer of the terminal.

In step S502, the terminal determines that consistent LBT failure occurs on the target object.

In implementation, the MAC layer of the terminal maintains a timer (Ibt-FailureDetectionTimer) and a counter (LBT_COUNTER), and an initial value of the counter is 0. Each time the MAC layer receives an LBT failure indicated by the physical layer, the MAC layer restarts the timer and the value of the counter is added by 1. If the counter LBT_COUNTER reaches a preset maximum value while the timer, lbt-FailureDetectionTimer, is running, the MAC layer determines that consistent LBT failure has occurred.

In step S503, the terminal determines a candidate target object set corresponding to the sidelink interface.

The candidate object target set contains at least one candidate target object.

Each candidate target object in the candidate target object set satisfies a part of or all of the following conditions:
Condition 1: Each candidate target object in the candidate target object set is a target object of the sidelink interface supported by capability of the terminal.
Condition 2: A channel measurement result corresponding to each candidate target object in the candidate target object set is greater than or equal to a preset threshold.
Condition 3: Each candidate target object in the candidate target object set is a target object available to the sidelink interface configured for the terminal by a network device accessed by the terminal.

In step S504, the terminal performs target object reselection within the candidate target object set.

In implementation, if the terminal determines that consistent LBT failure has occurred on a current target object, target object reselection is triggered, where the target object reselection is specifically performed as follows:
the terminal performs the target object reselection within the candidate target object set.

Optionally, after the target object reselection is performed by the terminal, if the target object selected from the candidate target object set is a shared spectrum, the terminal may further perform LBT on the reselected target object of the sidelink interface.

In step S505, if the terminal has experienced consistent LBT failure on each candidate target object in the candidate target object set of the sidelink interface, the MAC layer of the terminal needs to report, to a higher layer of the terminal, consistent LBT failure on the sidelink interface.

In step S506, if the higher layer of the terminal receives consistent LBT failure on the sidelink interface reported by the MAC layer, the terminal determines that an SL RLF has occurred.

In step S507, the terminal sends a first message to a network device serving the terminal.

In implementation, if the terminal is in an RRC connected state, the terminal reports the first message to the network device; or if the terminal is in an RRC connected state and the terminal uses a resource allocation mode of network scheduling, the terminal reports the first message to the network device.

Optionally, the first message needs to carry second indication information, the second indication information being used to indicate that the terminal has experienced the SL RLF because the terminal has experienced consistent LBT failure on the sidelink interface.

Way 2: The terminal reports first indication information to a network device serving the terminal.

In this way, after the terminal determines that consistent LBT failure has occurred on the target object, the terminal reports the first indication information to the network device serving the terminal.

Optionally, after the terminal determines that consistent LBT failure has occurred on the target object, the terminal, satisfying any one of the following conditions, reports the first indication information to the network device serving the terminal:
Condition 1: The terminal is in an RRC connected state;
Condition 2: The terminal is in an RRC connected state and the terminal uses a resource allocation mode of network scheduling.

The first indication information is used to indicate that the terminal has experienced consistent LBT failure on the sidelink interface or that the terminal has experienced consistent LBT failure on the target object of the sidelink interface.

Optionally, the terminal may report the first indication information to the network device serving the terminal via a Uu interface.

In implementation, the terminal uses an RRC signaling or a MAC CE to report the first indication information to the network device.

Here, the RRC signaling or the MAC CE at least includes one or combination of identification information of the target object and a link identification of the sidelink interface;
the link identification of the sidelink interface includes a part of or all of the following information:
a destination address of the sidelink interface, a source address of the sidelink interface, and a cast type of the sidelink interface.

For example, the link identification of the sidelink interface may be the destination address of the sidelink interface, or may be a combination of the destination address and the cast type of the sidelink interface, or may be a combination of the source address and the destination address of the sidelink interface, or may be a combination of the source address, the destination address and the cast type of the sidelink interface.

In reception of the first indication information reported by the terminal, the network device determines that the terminal has experienced consistent LBT failure on the target object of the sidelink interface or has experienced consistent LBT failure on the sidelink interface, and the network device sends a target object reconfiguration signaling to the terminal or notifies the terminal to release connection of the sidelink interface.

In implementation, the network device, in reception of the first indication information reported by the terminal, may proceed with two different manners.

Manner 1. The network device sends a target object reconfiguration signaling to the terminal.

In reception of the first indication information reported by the terminal, the network device reconfigures a target object for the terminal and issues the target object reconfiguration signaling to the terminal.

It is to be noted that the target object reconfigured for the terminal by the network device is a carrier or an BWP.

Accordingly, the terminal, in reception of the target object reconfiguration signaling issued by the network device, uses the target object reconfigured by the network device, or sets the target object reconfigured by the network device to an activated state.

Optionally, if the target object reconfigured by the network device is a shared spectrum, the terminal performs LBT on the reconfigured target object.

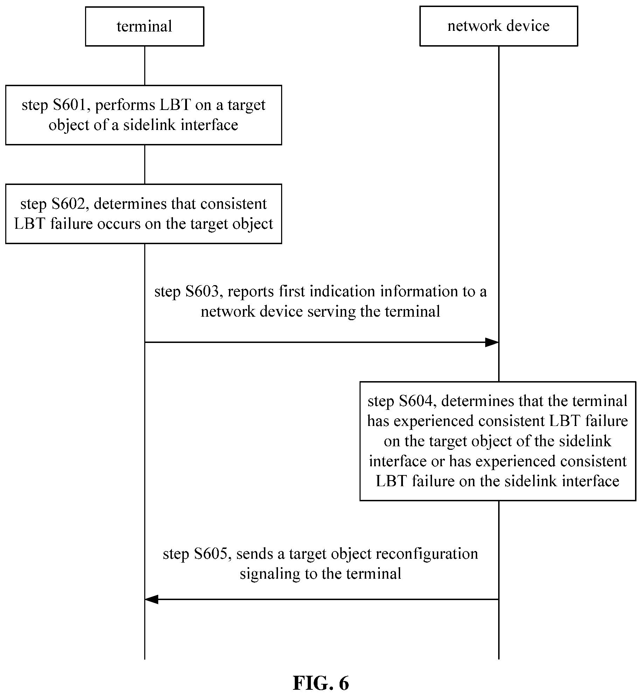

An overall flow of a method for handling consistent LBT failure experienced by a terminal is detailed hereinafter according to a specific embodiment of the present disclosure. As shown in FIG. 6, the overall flow may specifically include the following steps.

In step S601, the terminal performs LBT on a target object of a sidelink interface.

The target object is specifically one frequency domain resource unit, and the target object is one frequency domain resource unit that is configured for a current sidelink interface of the terminal or is one frequency domain resource unit in an activated state. The one frequency domain resource unit includes one of one carrier, one BWP, one resource pool, one frequency subband, and one resource set.

The terminal performs LBT on the target object as follows:
LBT is performed by a physical layer of the terminal, and if the terminal hears that a channel is occupied, no data transmission is performed;
if the physical layer of the terminal performs LBT prior to data transmission, and the LBT process results in that the channel is occupied and transmission is not possible, the physical layer of the terminal may indicate an LBT failure to a MAC layer of the terminal.

In step S602, the terminal determines that consistent LBT failure occurs on the target object.

In implementation, the MAC layer of the terminal maintains a timer (Ibt-FailureDetectionTimer) and a counter (LBT_COUNTER), and an initial value of the counter is 0. Each time the MAC layer receives an LBT failure indicated by the physical layer, the MAC layer restarts the timer and the value of the counter is added by 1. If the counter LBT_COUNTER reaches a preset maximum value while the timer, lbt-FailureDetectionTimer, is running, the MAC layer determines that consistent LBT failure has occurred.

In step S603, the terminal reports first indication information to a network device serving the terminal.

If consistent LBT failure occurs on a current target object of the sidelink interface of the terminal, the terminal is triggered to report to the network device via a Uu interface that consistent LBT failure has occurred on the target object; the indication information may specifically be reported in way of an RRC signaling or a MAC CE.

Here, the RRC signaling or the MAC CE at least includes one or combination of:
identification information of the target object on which consistent LBT failure occurs; and
a link identification of the sidelink interface on which consistent LBT failure occurs.

The link identification of the sidelink interface includes a part of or all of the following information:
a destination address of the sidelink interface, a source address of the sidelink interface, and a cast type of the sidelink interface.

For example, the link identification of the sidelink interface may be the destination address of the sidelink interface, or may be a combination of the destination address and the cast type of the sidelink interface, or may be a combination of the source address and the destination address of the sidelink interface, or may be a combination of the source address, the destination address and the cast type of the sidelink interface.

In step S604, the network device determines that the terminal has experienced consistent LBT failure on the target object of the sidelink interface or has experienced consistent LBT failure on the sidelink interface.

In step S605, the network device sends a target object reconfiguration signaling to the terminal.

Manner 2. The network device notifies the terminal to release connection of the sidelink interface.

After receiving the first indication information reported by the terminal, the network device determines that the terminal has experienced consistent LBT failure on the target object of the sidelink interface or has experienced consistent LBT failure on the sidelink interface, and the network device notifies the terminal to release connection of the sidelink interface.

It is noted that connection of the sidelink interface that the network device notifies the terminal to release includes at least one of a PC5-S connection or a PC5-RRC connection.

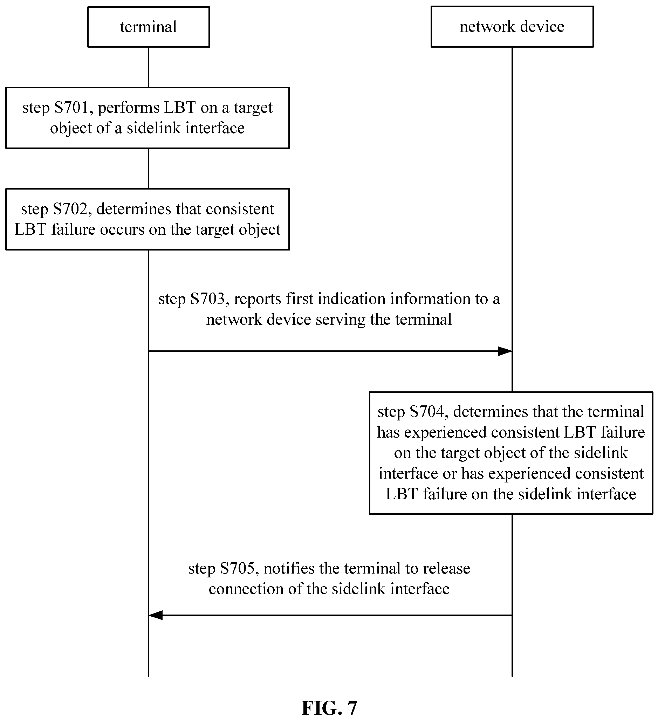

An overall flow of a method for handling consistent LBT failure experienced by a terminal is detailed hereinafter according to a specific embodiment of the present disclosure. As shown in FIG. 7, the overall flow may specifically include the following steps.

In step S701, the terminal performs LBT on a target object of a sidelink interface.

The target object is specifically one frequency domain resource unit, and the target object is one frequency domain resource unit that is configured for a current sidelink interface of the terminal or is one frequency domain resource unit in an activated state. The one frequency domain resource unit includes one of one carrier, one BWP, one resource pool, one frequency subband, and one resource set.

The terminal performs LBT on the target object as follows:
LBT is performed by a physical layer of the terminal, and if the terminal hears that a channel is occupied, no data transmission is performed;
if the physical layer of the terminal performs LBT prior to data transmission, and the LBT process results in that the channel is occupied and transmission is not possible, the physical layer of the terminal may indicate an LBT failure to a MAC layer of the terminal.

In step S702, the terminal determines that consistent LBT failure occurs on the target object.

In implementation, the MAC layer of the terminal maintains a timer (Ibt-FailureDetectionTimer) and a counter (LBT_COUNTER), and an initial value of the counter is 0. Each time the MAC layer receives an LBT failure indicated by the physical layer, the MAC layer restarts the timer and the value of the counter is added by 1. If the counter LBT_COUNTER reaches a preset maximum value while the timer, lbt-FailureDetectionTimer, is running, the MAC layer determines that consistent LBT failure has occurred.

In step S703, the terminal reports first indication information to a network device serving the terminal.

If consistent LBT failure occurs on a current target object of the sidelink interface of the terminal, the terminal is triggered to report to the network device via a Uu interface that consistent LBT failure has occurred on the target object; the indication information may specifically be reported in way of an RRC signaling or a MAC CE.

Here, the RRC signaling or the MAC CE at least includes one or combination of:
identification information of the target object on which consistent LBT failure occurs; and
a link identification of the sidelink interface on which consistent LBT failure occurs.

The link identification of the sidelink interface includes a part of or all of the following information:
a destination address of the sidelink interface, a source address of the sidelink interface, and a cast type of the sidelink interface.

For example, the link identification of the sidelink interface may be the destination address of the sidelink interface, or may be a combination of the destination address and the cast type of the sidelink interface, or may be a combination of the source address and the destination address of the sidelink interface, or may be a combination of the source address, the destination address and the cast type of the sidelink interface.

In step S704, the network device determines that the terminal has experienced consistent LBT failure on the target object of the sidelink interface or has experienced consistent LBT failure on the sidelink interface.

In step S705, the network device notifies the terminal to release connection of the sidelink interface.

In addition, for manner 2, after the terminal determines that consistent LBT failure has occurred on the target object and reports the first indication information to the network device serving the terminal, the terminal may perform target object reselection in an optional implementation.

In implementation, if there is any available target object for the current sidelink interface of the terminal in addition to the current target object on which consistent LBT failure has occurred, the terminal determines a candidate target object set for the sidelink interface and then performs target object reselection within the candidate target object set.

The candidate object target set contains at least one candidate target object.

Each candidate target object in the candidate target object set satisfies a part of or all of the following conditions:
Condition 1: Each candidate target object in the candidate target object set is a target object of the sidelink interface supported by capability of the terminal.
Condition 2: A channel measurement result corresponding to each candidate target object in the candidate target object set is greater than or equal to a preset threshold.
Condition 3: Each candidate target object in the candidate target object set is a target object available to the sidelink interface configured for the terminal by a network device accessed by the terminal.

Optionally, after the target object reselection, if the target object selected by the terminal from the candidate target object set is a shared spectrum, the terminal may further perform LBT on the reselected target object of the sidelink interface.

If the terminal further experiences consistent LBT failure on the reselected target object, the above steps S701~S704 are repeated until the terminal reselects a target object that can work properly or until consistent LBT failure occurs on each candidate target object.

Way 3: The terminal determines that an SL RLF has occurred.

In an optional implementation, the terminal determines that an SL RLF has occurred after determining that consistent LBT failure has occurred on the target object.

Exemplarily, if there is only one target object for the sidelink interface of the terminal, the terminal determines that an SL RLF has occurred after determining that consistent LBT failure has occurred on the target object.

After the terminal determines that the SL RLF has occurred, if the terminal is in an RRC connected state, the terminal reports a first message to a network device serving the terminal; or if the terminal is in an RRC connected state and the terminal uses a resource allocation mode of network scheduling, the terminal reports a first message to a network device serving the terminal.

The first message may be an RRC message or a MAC CE.

Exemplarily, the first message may be Sidelink UE Information.

In implementation, the first message needs to carry second indication information;
where the second indication information is used to indicate that the terminal has experienced the SL RLF because the terminal has experienced consistent LBT failure on the sidelink interface.

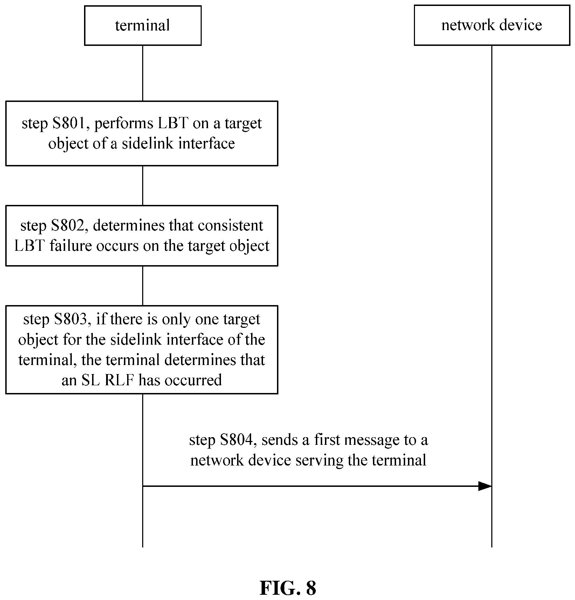

An overall flow of a method for handling consistent LBT failure experienced by a terminal is detailed hereinafter according to a specific embodiment of the present disclosure. As shown in FIG. 8, the overall flow may specifically include the following steps.

In step S801, the terminal performs LBT on a target object of a sidelink interface.

The target object is specifically one frequency domain resource unit, and the target object is one frequency domain resource unit that is configured for a current sidelink interface of the terminal or is one frequency domain resource unit in an activated state. The one frequency domain resource unit includes one of one carrier, one BWP, one resource pool, one frequency subband, and one resource set.

The terminal performs LBT on the target object as follows:
LBT is performed by a physical layer of the terminal, and if the terminal hears that a channel is occupied, no data transmission is performed;
if the physical layer of the terminal performs LBT prior to data transmission, and the LBT process results in that the channel is occupied and transmission is not possible, the physical layer of the terminal may indicate an LBT failure to a MAC layer of the terminal.

In step S802, the terminal determines that consistent LBT failure occurs on the target object.

In implementation, the MAC layer of the terminal maintains a timer (Ibt-FailureDetectionTimer) and a counter (LBT_COUNTER), and an initial value of the counter is 0. Each time the MAC layer receives an LBT failure indicated by the physical layer, the MAC layer restarts the timer and the value of the counter is added by 1. If the counter LBT_COUNTER reaches a preset maximum value while the timer, lbt-FailureDetectionTimer, is running, the MAC layer determines that consistent LBT failure has occurred.

In step S803, if there is only one target object for the sidelink interface of the terminal, the terminal determines that an SL RLF has occurred.

In step S804, the terminal sends a first message to a network device serving the terminal.

In implementation, if the terminal is in an RRC connected state, the terminal reports the first message to the network device; or if the terminal is in an RRC connected state and the terminal uses a resource allocation mode of network scheduling, the terminal reports the first message to the network device.

Optionally, the first message needs to carry second indication information, the second indication information being used to indicate that the terminal has experienced the SL RLF because the terminal has experienced consistent LBT failure on the sidelink interface.

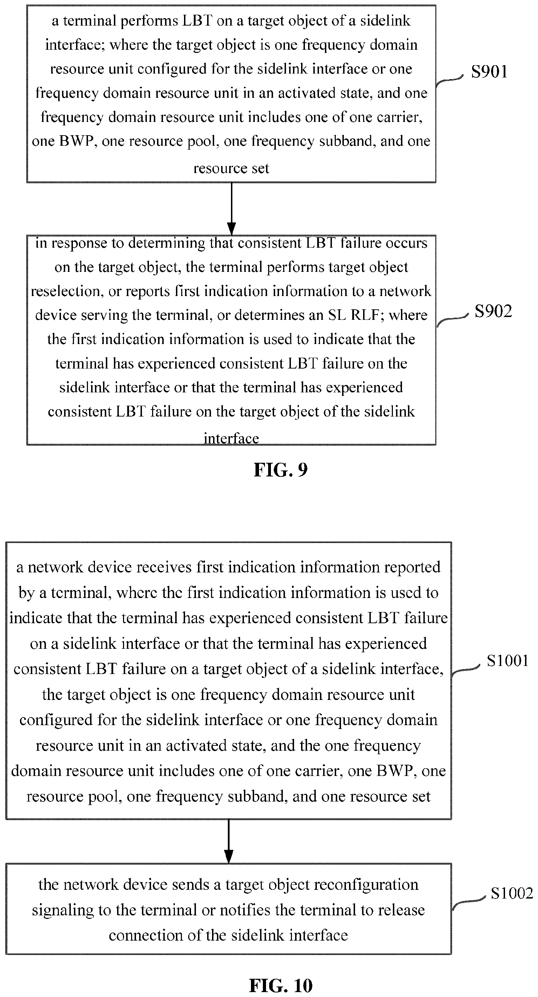

Based on the same inventive concept, a method for handling consistent LBT failure at terminal-side is provided according to embodiments of the present disclosure, the implementation of which may be referred to processes implemented by terminal-side as described above. As shown in FIG. 9, which is a flowchart of a method for handling consistent LBT failure at terminal-side according to an embodiment of the present disclosure, the method may specifically include the following steps.

In step S901, a terminal performs LBT on a target object of a sidelink interface; where the target object is one frequency domain resource unit configured for the sidelink interface or one frequency domain resource unit in an activated state, and one frequency domain resource unit includes one of one carrier, one BWP, one resource pool, one frequency subband, and one resource set.

In step S902, in response to determining that consistent LBT failure occurs on the target object, the terminal performs target object reselection, or reports first indication information to a network device serving the terminal, or determines an SL RLF; where the first indication information is used to indicate that the terminal has experienced consistent LBT failure on the sidelink interface or that the terminal has experienced consistent LBT failure on the target object of the sidelink interface.

Optionally, the terminal performing target object reselection specifically includes:
determining, by the terminal, a candidate target object set corresponding to the sidelink interface, where the candidate object target set contains at least one candidate target object; and
reselecting, by the terminal, a target object of the sidelink interface from the candidate target object set.

Optionally, each candidate target object in the candidate target object set satisfies a part of or all of the following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

Optionally, after the target object reselection is performed by the terminal, the method further includes:
if the target object reselected from the candidate target object set is a shared spectrum, performing, by the terminal, LBT on the reselected target object.

Optionally, after the target object reselection is performed by the terminal, the method further includes:
if the terminal determines that consistent LBT failure has occurred on each candidate target object in the candidate target object set, reporting, by a MAC layer of the terminal to a higher layer of the terminal, that the terminal has experienced consistent LBT failure on the sidelink interface.

Optionally, the method further includes:
after the higher layer of the terminal receives a report from the MAC layer of the terminal that the terminal has experienced consistent LBT failure on the sidelink interface, determining, by the terminal, that an SL RLF has occurred.

Optionally, after the terminal determines that the SL RLF has occurred, the method further includes:
if the terminal is in an RRC connected state, reporting, by the terminal, a first message to a network device serving the terminal, the first message being an RRC message or a MAC CE.

Optionally, the reporting, by the terminal, the first message to the network device serving the terminal if the terminal is in the RRC connected state includes:
if the terminal is in the RRC connected state and the terminal uses a resource allocation mode of network scheduling, reporting, by the terminal, the first message to the network device serving the terminal.

Optionally, the first message needs to carry second indication information, and the second indication information is used to indicate that the terminal has experienced the SL RLF because the terminal has experienced consistent LBT failure on the sidelink interface.

Optionally, the terminal reporting first indication information to a network device serving the terminal includes:
if the terminal is in an RRC connected state or if the terminal is in an RRC connected state and uses a resource allocation mode of network scheduling, reporting, by the terminal, the first indication information to the network device serving the terminal.

Optionally, the terminal reporting the first indication information to the network device serving the terminal specifically includes:
reporting, by the terminal, the first indication information to the network device in way of an RRC signaling or a MAC CE.

Here, the RRC signaling or the MAC CE at least includes one or combination of identification information of the target object and a link identification of the sidelink interface;
the link identification of the sidelink interface includes a part of or all of the following information:
a destination address of the sidelink interface, a source address of the sidelink interface, and a cast type of the sidelink interface.

Optionally, after the terminal reports the first indication information to the network device, the method further includes:
receiving a target object reconfiguration signaling sent by the network device; or
receiving a notification to release connection of the sidelink interface, the notification being issued by the network device.

Based on the same inventive concept, a method for handling consistent LBT failure at network device-side is provided according to embodiments of the present disclosure, the implementation of which may be referred to processes implemented by network device-side as described above. As shown in FIG. 10, which is a flowchart of a method for handling consistent LBT failure at network device-side according to an embodiment of the present disclosure, the method may specifically include the following steps.

In step S1001, a network device receives first indication information reported by a terminal, where the first indication information is used to indicate that the terminal has experienced consistent LBT failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit includes one of one carrier, one BWP, one resource pool, one frequency subband, and one resource set.

In step S1002, the network device sends a target object reconfiguration signaling to the terminal or notifies the terminal to release connection of the sidelink interface.

Optionally, the method further includes:
receiving, by the network device, a first message reported by the terminal, the first message being an RRC message or a MAC CE;
where the first message is reported by the terminal to the network device after the terminal determines that an SL RLF has occurred.

Optionally, the first message needs to carry second indication information, where the second indication information is used to indicate that the terminal has experienced the SL RLF because the terminal has experienced consistent LBT failure on the sidelink interface.

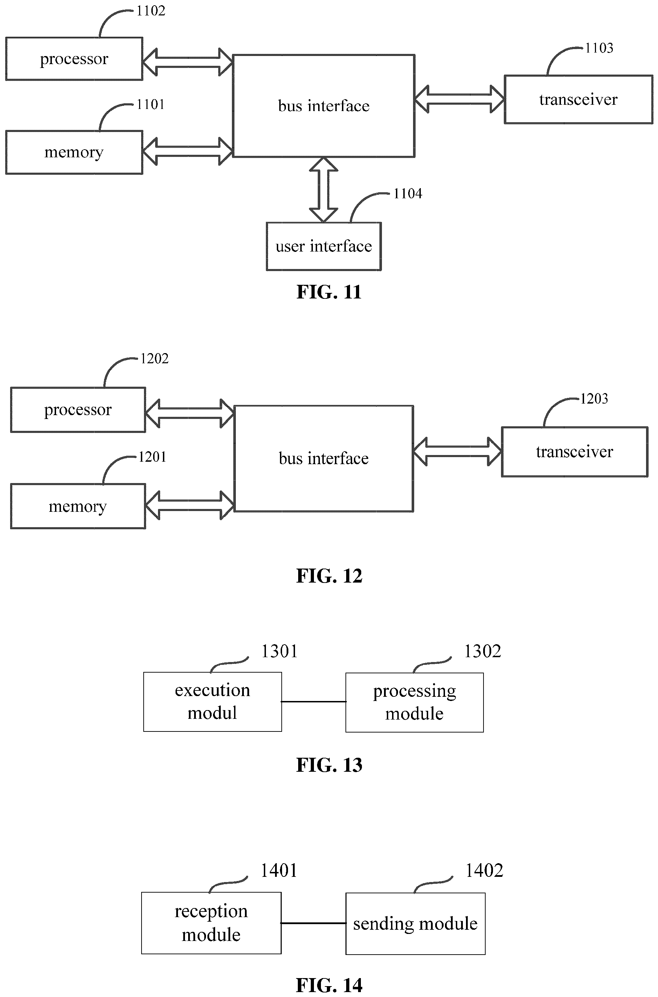

A terminal is provided according to an embodiment of the present disclosure. As shown in FIG. 11, the terminal includes a memory 1101, a processor 1102, and a transceiver 1103.

The memory 1101 is used to store a computer program.

The transceiver 1103 is used to transmit and receive data under control of the processor 1102.

The processor 1102 is used to read the computer program in the memory 1101 and perform the following operations:
performing LBT on a target object of a sidelink interface; where the target object is one frequency domain resource unit configured for the sidelink interface or one frequency domain resource unit in an activated state, and the one frequency domain resource unit includes one of one carrier, one BWP, one resource pool, one frequency subband, and one resource set;
in response to determining that consistent LBT failure occurs on the target object, performing target object reselection, or reporting first indication information to a network device serving the terminal, or determining an SL RLF; where the first indication information is used to indicate that the terminal has experienced consistent LBT failure on the sidelink interface or that the terminal has experienced consistent LBT failure on the target object of the sidelink interface.

Optionally, the processor 1102 is specifically used to:
determine a candidate target object set corresponding to the sidelink interface, where the candidate object target set contains at least one candidate target object; and
reselect a target object of the sidelink interface from the candidate target object set.

Optionally, each candidate target object in the candidate target object set satisfies a part of or all of the following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

Optionally, after the target object reselection is performed, the processor 1102 is further used to:
if the target object reselected from the candidate target object set is a shared spectrum, perform LBT on the reselected target object.

Optionally, after the target object reselection is performed, the processor 1102 is further used to:
in response to determining that consistent LBT failure has occurred on each candidate target object in the candidate target object set, report, via a MAC layer of the terminal to a higher layer of the terminal, that the terminal has experienced consistent LBT failure on the sidelink interface.

Optionally, the processor 1102 is further used to:
after the higher layer of the terminal receives a report from the MAC layer of the terminal that the terminal has experienced consistent LBT failure on the sidelink interface, determine that an SL RLF has occurred.

Optionally, after determining that the SL RLF has occurred, the processor 1102 is further used to:

if the terminal is in an RRC connected state, report a first message to a network device serving the terminal, the first message being an RRC message or a MAC CE.

Optionally, the processor 1102 is specifically used to:
if the terminal is in the RRC connected state and the terminal uses a resource allocation mode of network scheduling, report the first message to the network device serving the terminal.

Optionally, the first message needs to carry second indication information, and the second indication information is used to indicate that the terminal has experienced the SL RLF because the terminal has experienced consistent LBT failure on the sidelink interface.

Optionally, the processor 1102 is specifically used to:
if the terminal is in an RRC connected state or if the terminal is in an RRC connected state and uses a resource allocation mode of network scheduling, report first indication information to a network device serving the terminal.

Optionally, the processor 1102 is specifically used to:
report the first indication information to the network device in way of an RRC signaling or a MAC CE.

Here, the RRC signaling or the MAC CE at least includes one or combination of identification information of the target object and a link identification of the sidelink interface;
the link identification of the sidelink interface includes a part of or all of the following information:
a destination address of the sidelink interface, a source address of the sidelink interface, and a cast type of the sidelink interface.

Optionally, after reporting the first indication information to the network device, the processor 1102 is further used to:
receive a target object reconfiguration signaling sent by the network device; or
receive a notification to release connection of the sidelink interface, the notification being issued by the network device.

In FIG. 11, the bus architecture may include any number of interconnected buses and bridges, which are specifically linked together by various circuits of one or more processors, represented by processor 1102, and various circuits of memory, represented by memory 1101. The bus architecture may also link together various other circuits such as peripherals, voltage regulators, and power management circuits, all of which are well known in the art and, therefore, are not further described herein. The bus interface provides the interface. The transceiver 1103 may be multiple elements, i.e., including a transmitter and a receiver, providing units for communicating with a variety of other devices on transmission media including, among others, wireless channels, wired channels, fiber optic cables, and other transmission media. For different user devices, the user interface 1104 may also be an interface capable of externally or internally connecting desired devices, the connected devices include, but are not limited to, keypads, displays, speakers, microphones, operating levers, and the like.

The processor 1102 is responsible for managing the bus architecture and usual processing, and the memory 1101 may store data used by the processor 1102 in performing operations.

Optionally, the processor 1102 may be a central processing unit, CPU, an Application Specific Integrated Circuit, ASIC, a Field-Programmable Gate Array, FPGA, or a Complex Programmable Logic Device, CPLD, and the processor may also have a multi-core architecture.

The processor, which may invoke a computer program stored in the memory, is used to execute any of the described terminal-side methods provided by embodiments of the present disclosure in accordance with obtained executable instructions. The processor and the memory may also be physically arranged separately.

A network device is provided according to an embodiment of the present disclosure. As shown in FIG. 12, the network device includes a memory 1201, a processor 1202, and a transceiver 1203.

The memory 1201 is used to store a computer program.

The transceiver 1203 is used to transmit and receive data under control of the processor 1202.

The processor 1202 is used to read the computer program in the memory 1201 and perform the following operations:
receiving first indication information reported by a terminal, where the first indication information is used to indicate that the terminal has experienced consistent LBT failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit includes one of one carrier, one BWP, one resource pool, one frequency subband, and one resource set;
sending a target object reconfiguration signaling to the terminal or notifying the terminal to release connection of the sidelink interface.

Optionally, the processor 1202 is further used to:
receive a first message reported by the terminal, the first message being an RRC message or a MAC CE;
where the first message is reported by the terminal to the network device after the terminal determines that an SL RLF has occurred.

Optionally, the first message needs to carry second indication information, where the second indication information is used to indicate that the terminal has experienced the SL RLF because the terminal has experienced consistent LBT failure on the sidelink interface.

In FIG. 12, the bus architecture may include any number of interconnected buses and bridges, which are specifically linked together by various circuits of one or more processors, represented by processor 1202, and various circuits of memory, represented by memory 1201. The bus architecture may also link together various other circuits such as peripherals, voltage regulators, and power management circuits, all of which are well known in the art and, therefore, are not further described herein. The bus interface provides the interface. The transceiver 1203 may include multiple elements, i.e., including a transmitter and a receiver, providing units for communicating with a variety of other devices over a transmission medium, which include wireless channels, wired channels, fiber optic cables, and other transmission media. The processor 1202 is responsible for managing the bus architecture and usual processing, and the memory 1201 may store data used by the processor 1202 in performing operations.

Optionally, the processor 1202 may be a CPU, ASIC, FPGA, or CPLD, and the processor may also have a multi-core architecture.

The processor, which may invoke a computer program stored in the memory, is used to execute any of the described network device-side methods provided by embodiments of the present disclosure in accordance with obtained executable instructions. The processor and the memory may also be physically arranged separately.

An apparatus for handling consistent LBT failure is provided according to an embodiment of the present disclosure. As shown in FIG. 13, the apparatus includes:
an execution module 1301, used to perform LBT on a target object of a sidelink interface; where the target object is one frequency domain resource unit configured for the sidelink interface or one frequency domain resource unit in an activated state, and the one frequency domain resource unit includes one of one carrier, one BWP, one resource pool, one frequency subband, and one resource set;
a processing module 1302, used to perform target object reselection or report first indication information to a network device serving a terminal or determine an SL RLF, in response to determining that consistent LBT failure occurs on the target object; where the first indication information is used to indicate that the terminal has experienced consistent LBT failure on the sidelink interface or that the terminal has experienced consistent LBT failure on the target object of the sidelink interface.

Optionally, the processing module 1302 is specifically used to:
determine a candidate target object set corresponding to the sidelink interface, where the candidate object target set contains at least one candidate target object; and
reselect a target object of the sidelink interface from the candidate target object set.

Optionally, each candidate target object in the candidate target object set satisfies a part of or all of the following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

Optionally, after the target object reselection is performed, the processing module 1302 is further used to:
if the target object reselected from the candidate target object set is a shared spectrum, perform LBT on the reselected target object.

Optionally, after the target object reselection is performed, the processing module 1302 is further used to:
in response to determining that consistent LBT failure has occurred on each candidate target object in the candidate target object set, report, via a MAC layer of the terminal to a higher layer of the terminal, that the terminal has experienced consistent LBT failure on the sidelink interface.

Optionally, the processing module 1302 is further used to:
after the higher layer of the terminal receives a report from the MAC layer of the terminal that the terminal has experienced consistent LBT failure on the sidelink interface, determine that an SL RLF has occurred.

Optionally, after determining that the SL RLF has occurred, the processing module 1302 is further used to:
if the terminal is in an RRC connected state, report a first message to a network device serving the terminal, the first message being an RRC message or a MAC CE.

Optionally, the processing module 1302 is specifically used to:
if the terminal is in the RRC connected state and the terminal uses a resource allocation mode of network scheduling, report the first message to the network device serving the terminal.

Optionally, the first message needs to carry second indication information, and the second indication information is used to indicate that the terminal has experienced the SL RLF because the terminal has experienced consistent LBT failure on the sidelink interface.

Optionally, the processing module 1302 is specifically used to:
if the terminal is in an RRC connected state or if the terminal is in an RRC connected state and uses a resource allocation mode of network scheduling, report first indication information to a network device serving the terminal.

Optionally, the processing module 1302 is specifically used to:
report the first indication information to the network device in way of an RRC signaling or a MAC CE.

Here, the RRC signaling or the MAC CE at least includes one or combination of identification information of the target object and a link identification of the sidelink interface;
the link identification of the sidelink interface includes a part of or all of the following information:
a destination address of the sidelink interface, a source address of the sidelink interface, and a cast type of the sidelink interface.

Optionally, after reporting the first indication information to the network device, the processing module 1302 is further used to:
receive a target object reconfiguration signaling sent by the network device; or
receive a notification to release connection of the sidelink interface, the notification being issued by the network device.

An apparatus for handling consistent LBT failure is provided according to an embodiment of the present disclosure. As shown in FIG. 14, the apparatus includes:
a reception module 1401, used to receive first indication information reported by a terminal, where the first indication information is used to indicate that the terminal has experienced consistent LBT failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit includes one of one carrier, one BWP, one resource pool, one frequency subband, and one resource set;
a sending module 1402, used to send a target object reconfiguration signaling to the terminal or notify the terminal to release connection of the sidelink interface.

Optionally, the reception module 1401 is further used to:
receive a first message reported by the terminal, the first message being an RRC message or a MAC CE;
where the first message is reported by the terminal to the network device after the terminal determines that an SL RLF has occurred.

Optionally, the first message needs to carry second indication information, where the second indication information is used to indicate that the terminal has experienced the SL RLF because the terminal has experienced consistent LBT failure on the sidelink interface.

It should be noted that, the division of the modules in the embodiments of the present disclosure is schematic and is only a logical functional division, and there can be another division when actually realized. In addition, the various functional modules in various embodiments of the present disclosure may be integrated in one processing module, or each module may physically exist separately, or two or more modules may be integrated in one module. The above integrated modules may be implemented either in the form of hardware or in the form of software function modules.

The integrated modules, when implemented as software function modules and sold or used as a separate product, may be stored in a computer readable storage medium. Based on this understanding, the technical solution of the present disclosure essentially, or a part as a contribution to the prior art, or the technical solution in whole or in part may be embodied in the form of a software product that is stored in a storage medium including a number of instructions for causing a computer device (which may be a personal computer, a server, or a network device, etc.) or a processor to perform all or some of the steps of the method described in various embodiments of the present disclosure. The aforementioned storage medium includes: USB flash drive, removable hard disk, Read-Only Memory, ROM, Random Access Memory, RAM, magnetic disk, CD-ROM, and other medium that can store program code.

Additionally, a computer-readable storage medium is provided according to an embodiment of the present disclosure. The computer-readable storage medium stores a computer program, the computer program being used to cause a computer to perform any of the above-described methods for handling consistent LBT failure.

The computer-readable storage medium may be any usable medium or data storage device to which a computer can access, including, but not limited to, magnetic memories (e.g., floppy disks, hard disks, magnetic tapes, magnetic optical disks, MOs, etc.), optical memories (e.g., CDs, DVDs, BDs, HVDs, etc.), and semiconductor memories (e.g., ROMs, EPROMs, EEPROMs, non-volatile memories ( NAND FLASH), solid state drives, SSD), etc.

It should be appreciated by those skilled in the art that embodiments of the present disclosure may be provided as methods, systems, or computer program products. Accordingly, the present disclosure may embodied in the form of fully hardware, fully software, or combination of software and hardware. Further, the present disclosure may be embodied into a computer program product implemented on one or more computer-readable storage media (including, but not limited to, disk memory, CD-ROM, optical memory, and the like) that store computer-readable program codes thereon.

The present disclosure is described with reference to flowcharts and/or block diagrams of methods, apparatuses (systems), and computer program products according to the present disclosure. It is to be understood that each of the processes and/or blocks in the flowcharts and/or block diagrams, and combinations of the processes and/or blocks in the flowcharts and/or block diagrams, may be implemented by computer program instructions. These computer program instructions may be provided to a processor of a general-purpose computer, a special-purpose computer, an embedded processor, or other programmable data-processing device to produce a machine such that the instructions executed by the processor of the computer or other programmable data-processing device produce a device for carrying out the functions specified in one process or multiple processes of the flowchart and/or one block or multiple blocks of the block diagram.

These computer program instructions may also be stored in computer-readable memory capable of directing a computer or other programmable data processing device to operate in a particular manner, such that the instructions stored in that computer-readable memory produce an article of manufacture having an instruction device, where the instruction device implements function(s) specified in one or more of the processes of the flowchart and/or one or more of the blocks of the block diagram.

These computer program instructions may also be loaded onto a computer or other programmable data processing device such that a series of operational steps are performed on the computer or other programmable device to produce computer-implemented processing, such that the instructions executed on the computer or other programmable device provide steps for implementing the functions specified in one or more processes of the flowchart and/or the one or more blocks of the block diagram.

The present disclosure has been described above with reference to specific embodiments for ease of interpretation. However, the above exemplary discussion is not intended to be exhaustive or to limit the present disclosure to the embodiments as disclosed above. Various modifications and deformations can be obtained in accordance with the above teachings. The above embodiments have been selected and described for the purpose of better explaining the present disclosure, thereby enabling those skilled in the art to better use the described embodiments.

## Claims

1. A method for handling consistent Listen Before Talk, LBT, failure, **characterized by** comprising:
performing, by a terminal, LBT on a target object of a sidelink interface; wherein the target object is one frequency domain resource unit configured for the sidelink interface or one frequency domain resource unit in an activated state, and the one frequency domain resource unit comprises one of one carrier, one Bandwidth Part, BWP, one resource pool, one frequency subband, and one resource set; and
in response to determining that consistent LBT failure occurs on the target object, performing, by the terminal, target object reselection, or reporting, by the terminal, first indication information to a network device serving the terminal, or determining, by the terminal, a Side Link Radio Link Failure, SL RLF; wherein the first indication information is configured to indicate that the terminal has experienced consistent LBT failure on the sidelink interface or that the terminal has experienced consistent LBT failure on the target object of the sidelink interface.

2. The method according to claim 1, wherein the performing, by the terminal, target object reselection comprises:
determining, by the terminal, a candidate target object set corresponding to the sidelink interface, wherein the candidate object target set contains at least one candidate target object; and
reselecting, by the terminal, a target object of the sidelink interface from the candidate target object set.

3. The method according to claim 2, wherein each candidate target object in the candidate target object set satisfies a part of or all of following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

4. The method according to claim 2, after the target object reselection is performed by the terminal, further comprising:
if the target object reselected from the candidate target object set is a shared spectrum, performing, by the terminal, LBT on the reselected target object.

5. The method according to claim 2, after the target object reselection is performed by the terminal, further comprising:
if the terminal determines that consistent LBT failure has occurred on each candidate target object in the candidate target object set, reporting, by a Medium Access Control, MAC, layer of the terminal to a higher layer of the terminal, that the terminal has experienced consistent LBT failure on the sidelink interface.

6. The method according to claim 5, further comprising:
after the higher layer of the terminal receives a report from the MAC layer of the terminal that the terminal has experienced consistent LBT failure on the sidelink interface, determining, by the terminal, that an SL RLF has occurred.

7. The method according to claim 1 or 6, after the terminal determines that the SL RLF has occurred, further comprising:
if the terminal is in a Radio Resource Control, RRC, connected state, reporting, by the terminal, a first message to a network device serving the terminal, the first message being an RRC message or a MAC Control Element, CE.

8. The method according to claim 7, wherein the reporting, by the terminal, the first message to the network device serving the terminal if the terminal is in the RRC connected state comprises:
if the terminal is in the RRC connected state and the terminal uses a resource allocation mode of network scheduling, reporting, by the terminal, the first message to the network device serving the terminal.

9. The method according to claim 7, wherein the first message carries second indication information, and the second indication information is configured to indicate that the terminal has experienced the SL RLF because the terminal has experienced consistent LBT failure on the sidelink interface.

10. The method according to claim 1, wherein the reporting, by the terminal, first indication information to a network device serving the terminal comprises:
if the terminal is in an RRC connected state or if the terminal is in an RRC connected state and uses a resource allocation mode of network scheduling, reporting, by the terminal, the first indication information to the network device serving the terminal.

11. The method according to claim 1, wherein the reporting, by the terminal, first indication information to a network device serving the terminal comprises:
reporting, by the terminal, the first indication information to the network device in way of an RRC signaling or a MAC CE;
wherein the RRC signaling or the MAC CE at least comprises one or combination of identification information of the target object and a link identification of the sidelink interface; and
wherein the link identification of the sidelink interface comprises a part of or all of following information: a destination address of the sidelink interface, a source address of the sidelink interface, and a cast type of the sidelink interface.

12. The method according to claim 1, after the terminal reports the first indication information to the network device, further comprising:
receiving, by the terminal, a target object reconfiguration signaling sent by the network device; or
receiving, by the terminal, a notification to release connection of the sidelink interface, the notification being issued by the network device.

13. A method for handling consistent Listen Before Talk, LBT, failure, **characterized by** comprising:
receiving, by a network device, first indication information reported by a terminal, wherein the first indication information is configured to indicate that the terminal has experienced consistent LBT failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit comprises one of one carrier, one Bandwidth Part, BWP, one resource pool, one frequency subband, and one resource set;
sending, by the network device, a target object reconfiguration signaling to the terminal or notifying, by the network device, the terminal to release connection of the sidelink interface.

14. The method according to claim 13, further comprising:
receiving, by the network device, a first message reported by the terminal, the first message being a Radio Resource Control, RRC, message or a Medium Access Control Control Element, MAC CE;
wherein the first message is reported by the terminal to the network device after the terminal determines that a Side Link Radio Link Failure, SL RLF, has occurred.

15. The method according to claim 14, wherein the first message carries second indication information, and the second indication information is configured to indicate that the terminal has experienced the SL RLF because the terminal has experienced consistent LBT failure on the sidelink interface.

16. A terminal, comprising a memory, a processor, and a transceiver, **characterized in that**:
the memory is configured to store a computer program;
the transceiver is configured to transmit and receive data under control of the processor; and
the processor is configured to read the computer program in the memory and perform:
performing Listen Before Talk, LBT, on a target object of a sidelink interface; wherein the target object is one frequency domain resource unit configured for the sidelink interface or one frequency domain resource unit in an activated state, and the one frequency domain resource unit comprises one of one carrier, one Bandwidth Part, BWP, one resource pool, one frequency subband, and one resource set; and
in response to determining that consistent LBT failure occurs on the target object, performing target object reselection, or reporting first indication information to a network device serving the terminal, or determining a Side Link Radio Link Failure, SL RLF; wherein the first indication information is configured to indicate that the terminal has experienced consistent LBT failure on the sidelink interface or that the terminal has experienced consistent LBT failure on the target object of the sidelink interface.

17. The terminal according to claim 16, wherein the processor is configured to:
determine a candidate target object set corresponding to the sidelink interface, wherein the candidate object target set contains at least one candidate target object; and
reselect a target object of the sidelink interface from the candidate target object set.

18. The terminal according to claim 17, wherein each candidate target object in the candidate target object set satisfies a part of or all of following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

19. The terminal according to claim 17, wherein after the target object reselection is performed, the processor is further configured to:
if the target object reselected from the candidate target object set is a shared spectrum, perform LBT on the reselected target object.

20. The terminal according to claim 17, wherein after the target object reselection is performed, the processor is further configured to:
in response to determining that consistent LBT failure has occurred on each candidate target object in the candidate target object set, report, via a Medium Access Control, MAC, layer of the terminal to a higher layer of the terminal, that the terminal has experienced consistent LBT failure on the sidelink interface.

21. The terminal according to claim 20, wherein the processor is further configured to:
after the higher layer of the terminal receives a report from the MAC layer of the terminal that the terminal has experienced consistent LBT failure on the sidelink interface, determine that an SL RLF has occurred.

22. The terminal according to claim 16 or 21, wherein after determining that the SL RLF has occurred, the processor is further configured to:
if the terminal is in a Radio Resource Control, RRC, connected state, report a first message to a network device serving the terminal, the first message being an RRC message or a MAC Control Element, CE.

23. The terminal according to claim 22, wherein the processor is configured to:
if the terminal is in the RRC connected state and the terminal uses a resource allocation mode of network scheduling, report the first message to the network device serving the terminal.

24. The terminal according to claim 22, wherein the first message carries second indication information, and the second indication information is configured to indicate that the terminal has experienced the SL RLF because the terminal has experienced consistent LBT failure on the sidelink interface.

25. The terminal according to claim 16, wherein the processor is configured to:
if the terminal is in an RRC connected state or if the terminal is in an RRC connected state and uses a resource allocation mode of network scheduling, report the first indication information to the network device serving the terminal.

26. The terminal according to claim 16, wherein the processor is configured to:
report the first indication information to the network device in way of an RRC signaling or a MAC CE;
wherein the RRC signaling or the MAC CE at least comprises one or combination of identification information of the target object and a link identification of the sidelink interface; and
wherein the link identification of the sidelink interface comprises a part of or all of following information: a destination address of the sidelink interface, a source address of the sidelink interface, and a cast type of the sidelink interface.

27. The terminal according to claim 16, wherein after reporting the first indication information to the network device, the processor is further configured to:
receive a target object reconfiguration signaling sent by the network device; or
receive a notification to release connection of the sidelink interface, the notification being issued by the network device.

28. A network device, comprising a memory, a processor, and a transceiver, **characterized in that**:
the memory is configured to store a computer program;
the transceiver is configured to transmit and receive data under control of the processor; and
the processor is configured to read the computer program in the memory and perform:
receiving first indication information reported by a terminal, wherein the first indication information is configured to indicate that the terminal has experienced consistent Listen Before Talk, LBT, failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit comprises one of one carrier, one Bandwidth Part, BWP, one resource pool, one frequency subband, and one resource set;
sending a target object reconfiguration signaling to the terminal or notifying the terminal to release connection of the sidelink interface.

29. The network device according to claim 28, wherein the processor is further configured to:
receive a first message reported by the terminal, the first message being a Radio Resource Control, RRC, message or a Medium Access Control Control Element, MAC CE;
wherein the first message is reported by the terminal to the network device after the terminal determines that a Side Link Radio Link Failure, SL RLF, has occurred.

30. The network device according to claim 29, wherein the first message carries second indication information, and the second indication information is configured to indicate that the terminal has experienced the SL RLF because the terminal has experienced consistent LBT failure on the sidelink interface.

31. An apparatus for handling consistent Listen Before Talk, LBT, failure, **characterized by** comprising:
an execution module, configured to perform LBT on a target object of a sidelink interface; wherein the target object is one frequency domain resource unit configured for the sidelink interface or one frequency domain resource unit in an activated state, and the one frequency domain resource unit comprises one of one carrier, one Bandwidth Part, BWP, one resource pool, one frequency subband, and one resource set; and
a processing module, configured to perform target object reselection or report first indication information to a network device serving a terminal or determine a Side Link Radio Link Failure, SL RLF, in response to determining that consistent LBT failure occurs on the target object; wherein the first indication information is configured to indicate that the terminal has experienced consistent LBT failure on the sidelink interface or that the terminal has experienced consistent LBT failure on the target object of the sidelink interface.

32. The apparatus according to claim 31, wherein the processing module is configured to:
determine a candidate target object set corresponding to the sidelink interface, wherein the candidate object target set contains at least one candidate target object; and
reselect a target object of the sidelink interface from the candidate target object set.

33. The apparatus according to claim 32, wherein each candidate target object in the candidate target object set satisfies a part of or all of following conditions:
each candidate target object in the candidate target object set is a target object of the sidelink interface supported by capability of the terminal;
a channel measurement result corresponding to each candidate target object in the candidate target object set is greater than or equal to a preset threshold; and
each candidate target object in the candidate target object set is a target object available to the sidelink interface configured for the terminal by a network device accessed by the terminal.

34. The apparatus according to claim 32, wherein after the target object reselection is performed, the processing module is further configured to:
if the target object reselected from the candidate target object set is a shared spectrum, perform LBT on the reselected target object.

35. The apparatus according to claim 32, wherein after the target object reselection is performed, the processing module is further configured to:
in response to determining that consistent LBT failure has occurred on each candidate target object in the candidate target object set, report, via a Medium Access Control, MAC, layer of the terminal to a higher layer of the terminal, that the terminal has experienced consistent LBT failure on the sidelink interface.

36. The apparatus according to claim 35, wherein the processing module is further configured to:
after the higher layer of the terminal receives a report from the MAC layer of the terminal that the terminal has experienced consistent LBT failure on the sidelink interface, determine that an SL RLF has occurred.

37. The apparatus according to claim 31 or 36, wherein after determining that the SL RLF has occurred, the processing module is further configured to:
if the terminal is in a Radio Resource Control, RRC, connected state, report a first message to a network device serving the terminal, the first message being an RRC message or a MAC Control Element, CE.

38. The apparatus according to claim 37, wherein the processing module is configured to:
if the terminal is in the RRC connected state and the terminal uses a resource allocation mode of network scheduling, report the first message to the network device serving the terminal.

39. The apparatus according to claim 37, wherein the first message carries second indication information, and the second indication information is configured to indicate that the terminal has experienced the SL RLF because the terminal has experienced consistent LBT failure on the sidelink interface.

40. The apparatus according to claim 31, wherein the processing module is configured to:
if the terminal is in an RRC connected state or if the terminal is in an RRC connected state and uses a resource allocation mode of network scheduling, report the first indication information to the network device serving the terminal.

41. The apparatus according to claim 31, wherein the processing module is configured to:
report the first indication information to the network device in way of an RRC signaling or a MAC CE;
wherein the RRC signaling or the MAC CE at least comprises one or combination of identification information of the target object and a link identification of the sidelink interface; and
wherein the link identification of the sidelink interface comprises a part of or all of following information: a destination address of the sidelink interface, a source address of the sidelink interface, and a cast type of the sidelink interface.

42. The apparatus according to claim 31, wherein after reporting the first indication information to the network device, the processing module is further configured to:
receive a target object reconfiguration signaling sent by the network device; or
receive a notification to release connection of the sidelink interface, the notification being issued by the network device.

43. An apparatus for handling consistent Listen Before Talk, LBT, failure, **characterized by** comprising:
a reception module, configured to receive first indication information reported by a terminal, wherein the first indication information is configured to indicate that the terminal has experienced consistent LBT failure on a sidelink interface or that the terminal has experienced consistent LBT failure on a target object of a sidelink interface, the target object is one frequency domain resource unit configured for the sidelink interface or one frequency domain resource unit in an activated state, and the one frequency domain resource unit comprises one of one carrier, one Bandwidth Part, BWP, one resource pool, one frequency subband, and one resource set; and
a sending module, configured to send a target object reconfiguration signaling to the terminal or notify the terminal to release connection of the sidelink interface.

44. The apparatus according to claim 43, wherein the reception module is further configured to:
receive a first message reported by the terminal, the first message being a Radio Resource Control, RRC, message or a Medium Access Control Control Element, MAC CE;
wherein the first message is reported by the terminal to the network device after the terminal determines that a Side Link Radio Link Failure, SL RLF, has occurred.

45. The apparatus according to claim 44, wherein the first message carries second indication information, and the second indication information is configured to indicate that the terminal has experienced the SL RLF because the terminal has experienced consistent LBT failure on the sidelink interface.

46. A computer-readable storage medium, which stores a computer program thereon, **characterized in that** the computer program is configured to cause a computer to perform the method according to any one of claims 1 to 12 or to perform the method according to any one of claims 13 to 15.
